# FASCICULE DE BREVET EUROPEEN

(11) **EP 4 275 124 B1**
(45) Date de publication et mention de la délivrance du brevet: **25.09.2024**
(21) Numéro de dépôt: 22700315.9
(22) Date de dépôt: 06.01.2022
(51) Int. Cl.: G06F 11/16, G06F 11/14, B60W 50/023

(54) **DISPOSITIF ET PROCÉDÉ DE CALCUL DE PARAMÈTRES DE CONDUITE**
VORRICHTUNG UND VERFAHREN ZUR BERECHNUNG VON FAHRPARAMETERN
DEVICE AND METHOD FOR COMPUTING DRIVING PARAMETERS

(30) Priorité: 08.01.2021 FR 2100170
(43) Date de publication de la demande: 15.11.2023
(73) Titulaire: Ampere SAS, 92100 Boulogne-Billancourt (FR); NISSAN MOTOR CO., LTD., Yokohama-shi, Kanagawa 221-0023 (JP)
(72) Inventeur: BERTRAND, Patrice, 31100 Toulouse (FR); PERRAUD, Eric, 31100 Toulouse (FR)
(74) Mandataire: Renault Group
(86) Numéro de dépôt international: PCT/EP2022/050206
(87) Numéro de publication internationale: WO 2022/148812

(56) Documents cités:
- EP-A1- 3 663 920
- US-A1- 2020 017 114

## Description

### Art antérieur

L'invention concerne de manière général les systèmes de calcul, et en particulier un dispositif et un procédé de calcul de paramètres de conduite, destinés à être embarqués dans un véhicule.

Dans le domaine de l'automobile, des développements majeurs ont été réalisés ces dernières années dans le cadre de l'automatisation des véhicules. Les véhicules automatisés ou semi-automatisés intègrent des systèmes de contrôle pour contrôler la conduite du véhicule et/ou sa sécurité, tels que des systèmes d'aide à la conduite, tels que par exemple les systèmes ADAS (Advanced Driver Assistance Systems), des régulateurs de vitesse adaptatifs, des systèmes anticollisions, etc. La mise en oeuvre des applications de contrôle utilisées par de tels systèmes de contrôle nécessite généralement le déploiement dans le véhicule de plusieurs capteurs pour percevoir l'environnement et d'un ou de plusieurs calculateurs exécutant des algorithmes de plus en plus exigeants en termes de puissance de calcul et en termes de niveau de Sureté de Fonctionnement (SdF). La SdF dans le domaine automobile est principalement régie par la norme ISO 26262 imposant aux fournisseurs de circuits intégrés de respecter des règles de conception garantissant la qualité de leurs calculateurs. La norme ISO 26262 s'applique également aux intégrateurs des circuits intégrés dans les véhicules pour assurer que les erreurs susceptibles de se produire dans un calculateur lors de l'exécution d'un algorithme donné soient contrôlables. De telles erreurs peuvent être de nature systématique ou de nature aléatoire.

US 2020/017114 A1 divulgue un dispositif de calcul comprenant une première unité de calcul et une deuxième unité de calcul ayant une puissance de calcul supérieure à celle de la première unité de calcul et un niveau d'intégrité inférieur à celui de la première unité de calcul.

EP 3 663 920 A1 divulgue un dispositif et un procédé pour détecter des erreurs de calcul comportant l'exécution redondante de fonctions de calcul et la comparaison de paramètres de comparaison associés au calcul.

Il est connu d'utiliser des méthodes de développement et des campagnes de tests intensives afin de traiter les erreurs systématiques. De telles approches ne sont généralement pas compatibles avec le traitement des erreurs aléatoires qui peuvent correspondre à une inversion d'un bit lors de la lecture ou lors de l'écriture dans un registre ou dans une mémoire, ou lors de l'exécution d'une instruction d'un algorithme donné. Les erreurs aléatoires peuvent par exemples être induites par des perturbations photoniques ou électromagnétiques provenant de l'environnement extérieur. La probabilité d'occurrence de ces erreurs aléatoires devient de plus en plus élevée avec les processeurs très performants développés dans des technologies semi-conducteurs proches de quelques nanomètres de gravure.

Une solution connue pour traiter les erreurs aléatoires susceptibles d'affecter un calculateur consiste à dupliquer les ressources matérielles (processeurs, mémoires et autres) utilisées, à exécuter de manière redondante toutes les instructions d'un algorithme pour ensuite comparer les résultats obtenus afin d'identifier des différences potentielles, représentatives de l'apparition d'une erreur aléatoire. Une telle solution est appelée « Hardware Lockstep » (signifiant « duplication de ressources matérielles »). La solution « Hardware Lockstep » est particulièrement efficace dans des applications à faible vitesse de calcul et serait adaptée à des algorithmes complexes nécessitant une vitesse de calcul élevée tels que ceux requis dans des véhicules. Cependant, la solution « Hardware Lockstep » utilisée avec de tels algorithmes complexes n'est pas disponible commercialement et est très coûteuse.

Il existe donc un besoin pour un dispositif et un procédé de calcul améliorés capable de traiter les erreurs aléatoires susceptibles de se produire lors de l'exécution d'un algorithme sans avoir besoin de dupliquer toutes les ressources matérielles utilisées.

### Définition générale de l'invention

A cet effet, la présente invention fournit un dispositif de calcul de paramètres de conduite destiné à être embarqué dans un véhicule, le dispositif comprend :
- une première unité de calcul, associée à une puissance de calcul et à niveau d'intégrité donnés ; et
- une deuxième unité de calcul, comprenant un ou plusieurs calculateurs, la deuxième unité de calcul étant associée à une puissance de calcul supérieure à la puissance de calcul associée à la première unité de calcul et à un niveau d'intégrité inférieur au niveau d'intégrité associé à la première unité de calcul, la deuxième unité de calcul étant configurée pour exécuter une ou plusieurs fonctions de calcul, ce qui fournit, pour chaque fonction de calcul, une sortie comprenant un résultat de calcul et un paramètre de comparaison représentatif du résultat de calcul.

En réponse à la réception d'une demande de calcul d'un paramètre de conduite, la demande de calcul correspondant à une fonction de calcul donnée, la première unité de calcul est configurée pour :
- déterminer un contexte d'exécution de la fonction de calcul donnée sur la deuxième unité de calcul ;
- déclencher une première exécution, dite exécution nominale, de la fonction de calcul donnée, selon le contexte d'exécution déterminé, sur la deuxième unité de calcul, ce qui fournit une première sortie comprenant un premier résultat de calcul du paramètre de conduite et un premier paramètre de comparaison, un premier paramètre temporel d'exécution étant associé au premier paramètre de comparaison ;
- déclencher une deuxième exécution, dite exécution redondante, de la fonction de calcul donnée, selon le contexte d'exécution déterminé, sur la deuxième unité de calcul, ce qui fournit une deuxième sortie comprenant un deuxième résultat de calcul du paramètre de conduite et un deuxième paramètre de comparaison, un deuxième paramètre temporel d'exécution étant associé au deuxième paramètre de comparaison ;
- comparer le premier et le deuxième paramètre de comparaison, un paramètre temporel de comparaison étant associé au résultat de la comparaison ;
- déterminer un statut de calcul du paramètre de conduite en fonction d'une condition dépendant du résultat de la comparaison et en fonction des paramètres temporels, le statut de calcul étant positif si les deux paramètres de comparaison sont identiques et les paramètres temporels sont valides.

Dans un mode de réalisation, un paramètre temporel peut être valide s'il est inférieur à un seuil correspondant.

Dans un autre mode de réalisation, le paramètre de comparaison peut être obtenu à partir du résultat de calcul correspondant en appliquant une fonction de hachage.

Avantageusement, l'exécution nominale et l'exécution redondante peuvent s'effectuer de manière séquentielle dans le temps, la deuxième unité de calcul comprenant un ou plusieurs calculateurs.

En variante, l'exécution nominale et l'exécution redondante peuvent s'effectuer sur un même calculateur de la deuxième unité de calcul.

Dans un mode de réalisation, l'exécution nominale et l'exécution redondante peuvent s'effectuer de manière parallèle dans le temps sur deux calculateurs distincts de la deuxième unité de calcul.

Dans un autre mode de réalisation, la demande de calcul peut être émise par un dispositif émetteur et le dispositif de calcul peut en outre être configuré pour transmettre au dispositif émetteur, via la première unité de calcul, le premier résultat de calcul et une notification d'un statut de calcul positif, si le statut de calcul est positif.

Optionnellement, la demande de calcul peut être émise par un dispositif émetteur et le dispositif de calcul peut en outre être configuré pour transmettre au dispositif émetteur, via la première unité de calcul, une notification de divergence de calcul, si le statut de calcul est négatif.

Avantageusement, la première unité de calcul peut être configurée pour mettre en oeuvre une pluralité d'itérations jusqu'à ce que le statut de calcul soit positif.

En variante, la première unité de calcul peut en outre être configurée pour vérifier l'intégrité de la demande de calcul reçue.

Dans un mode de réalisation, le contexte d'exécution peut être défini par la première unité de calcul en fonction d'un flux de données brutes directement transmis d'un capteur externe à la deuxième unité de calcul.

Dans un autre mode de réalisation, le niveau d'intégrité de la première unité de calcul peut être assuré au moyen d'une technique de redondance matérielle.

Avantageusement, le contexte d'exécution peut comprendre une pluralité de variables d'entrée, une pluralité de nombres aléatoires et des informations de temps.

Il est en outre proposé un procédé de calcul de paramètres de conduite destiné à être mis en oeuvre dans un dispositif de calcul embarqué dans un véhicule, le dispositif de calcul comprenant :
- une première unité de calcul, associée à une puissance de calcul et à niveau d'intégrité donnés ; et
- une deuxième unité de calcul, comprenant un ou plusieurs calculateurs, la deuxième unité de calcul étant associée à une puissance de calcul supérieure à la puissance de calcul associée à la première unité de calcul et à un niveau d'intégrité inférieur au niveau d'intégrité associé à la première unité de calcul, la deuxième unité de calcul étant configurée pour exécuter une ou plusieurs fonctions de calcul, ce qui fournit, pour chaque fonction de calcul, une sortie comprenant un résultat de calcul et un paramètre de comparaison représentatif du résultat de calcul.

Le procédé comprend, en réponse à la réception d'une demande de calcul d'un paramètre de conduite, la demande de calcul correspondant à une fonction de calcul donnée, les étapes suivantes mises en oeuvre par la première unité de calcul et consistant à :
- déterminer un contexte d'exécution de la fonction de calcul donnée sur la deuxième unité de calcul ;
- déclencher une première exécution, dite exécution nominale, de la fonction de calcul donnée, selon le contexte d'exécution déterminé, sur la deuxième unité de calcul, ce qui fournit une première sortie comprenant un premier résultat de calcul du paramètre de conduite et un premier paramètre de comparaison, un premier paramètre temporel d'exécution étant associé au premier paramètre de comparaison ;
- déclencher une deuxième exécution, dite exécution redondante, de la fonction de calcul donnée, selon le contexte d'exécution déterminé, sur la deuxième unité de calcul, ce qui fournit une deuxième sortie comprenant un deuxième résultat de calcul du paramètre de conduite et un deuxième paramètre de comparaison, un deuxième paramètre temporel d'exécution étant associé au deuxième paramètre de comparaison ;
- comparer le premier et le deuxième paramètre de comparaison, un paramètre temporel de comparaison étant associé au résultat de la comparaison ;
- déterminer un statut de calcul du paramètre de conduite en fonction d'une condition dépendant du résultat de la comparaison et en fonction des paramètres temporels, le statut de calcul étant positif si les deux paramètres de comparaison sont identiques et les paramètres temporels sont valides.

### Brève description des figures

D'autres caractéristiques et avantages de l'invention apparaîtront à l'aide de la description qui suit et des figures dans lesquels :
[fig.1] représente l'architecture générale d'un dispositif de calcul de paramètres de conduite, selon un mode de réalisation de l'invention ;
[fig.2] représente une architecture détaillée d'un dispositif de calcul de paramètres de conduite, selon un mode de réalisation de l'invention ;
[fig.3] représente une autre architecture d'un dispositif de calcul de paramètres de conduite, selon un autre mode de réalisation de l'invention ;
[fig.4] est un organigramme représentant des étapes mises en oeuvre dans un procédé de calcul de paramètres de conduite, selon un mode de réalisation de l'invention ; et
[fig.5] est un organigramme représentant des étapes mises en oeuvre dans un procédé de calcul de paramètres de conduite, selon un autre mode de réalisation de l'invention.

### Description détaillée

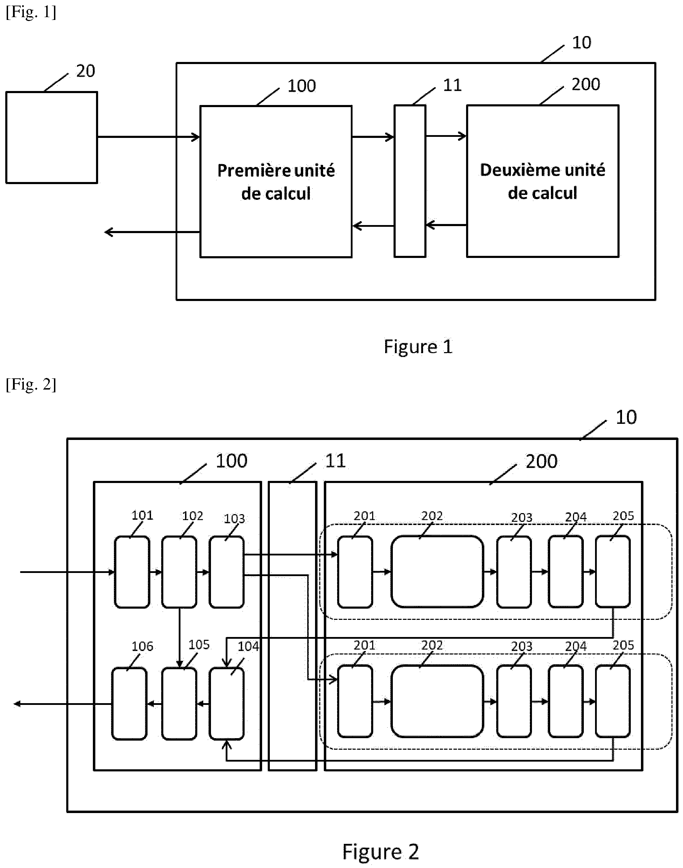

La [fig.1] représente une architecture générale d'un dispositif de calcul de paramètres de conduite 10 selon un mode de réalisation de l'invention. Le dispositif de calcul comprend une première unité de calcul 100 et une deuxième unité de calcul 200. Les deux unités de calcul 100, 200 sont configurées pour échanger des données numériques via une unité de communication 11 apte à assurer des communications fiables entre les deux unités de calcul 100, 200. Chacune des deux unités de calcul 100, 200 peut comprendre un ou plusieurs calculateurs capables d'exécuter des instructions représentant un programme représentatif d'une fonction de coordination ou d'une fonction de calcul, et des ressources en mémoire capables de sauvegarder, de manière volatile ou permanente, des données associées à de telles instructions. Avantageusement, chacune des deux unités de calcul 100, 200 peut être associée à des performances comprenant une puissance de calcul et un niveau d'intégrité.

La puissance de calcul d'une unité de calcul peut par exemple être définie en termes de vitesse de calcul, c'est-à-dire en termes de nombre d'instructions par seconde que l'unité de calcul peut exécuter. Dans la suite de la description, la puissance de calcul de la première unité de calcul 100 est choisi inférieure, par exemple d'un facteur 10, par rapport à la puissance de calcul de la deuxième unité de calcul 200.

Par ailleurs, le niveau d'intégrité d'une unité de calcul peut par exemple quantifier le degré de confiance associé aux résultats de calcul fournis. En effet, un résultat de calcul fourni par une unité de calcul peut être faussé suite à des erreurs systématiques et/ou aléatoires subies par l'unité de calcul. En outre, un seuil d'intégrité prédéfini peut avantageusement être utilisé de manière à ce qu'une unité de calcul puisse être classée en catégorie « Sureté de Fonctionnement (SdF) assurée » si le niveau d'intégrité associé est supérieur au seuil d'intégrité prédéfini. Dans la suite de la description, le niveau d'intégrité de la première unité de calcul 100 est choisi supérieur à celui de la deuxième unité de calcul 200 et au seuil d'intégrité prédéfini, la SdF étant ainsi assurée dans la première unité de calcul 100.

Dans un mode de réalisation de l'invention, la SdF de la première unité de calcul 100 peut être assurée au moyen d'une technique de redondance matérielle, également connue sous l'expression « Hardware Lockstep », consistant à dupliquer les ressources matérielles (processeurs et ressources en mémoire) et à exécuter de manière redondante les ressources logicielles mises en oeuvre. La SdF est assurée, dans ce cas, par l'exécution redondante, de manière parallèle ou séquentielle dans le temps, de toutes les instructions d'un programme et par la comparaison des résultats obtenus afin de détecter des potentielles erreurs, l'erreur étant détectée lorsque les deux résultats obtenus ne sont pas identiques. Avantageusement, la première unité de calcul 100 peut être utilisée pour exécuter des fonctions nécessitant un niveau d'intégrité élevé.

Dans un autre mode de réalisation, la SdF de la deuxième unité de calcul 200 peut ne pas être assurée, c'est-dire que le niveau d'intégrité associé à la deuxième unité de calcul 200 peut être inférieur au seuil d'intégrité prédéfini. Dans ce cas, les ressources matérielles mises en oeuvre dans la deuxième unité de calcul 200 peuvent ne pas être dupliquées. Par exemple, la deuxième unité de calcul 200 peut comprendre un seul calculateur. Avantageusement, la deuxième unité de calcul 200 peut être utilisée pour exécuter des fonctions nécessitant une puissance de calcul élevée.

Le dispositif de calcul 10 peut recevoir et traiter des demandes de calcul de paramètres de conduite générées par des dispositifs émetteurs externes 20. Des exemples de demandes de calcul comprennent, à titre d'exemple, le calcul d'un itinéraire à suivre, la détermination d'une vitesse optimale de conduite et l'identification d'objets susceptibles de provoquer une collision. De manière générale, le traitement d'une demande de calcul implique l'exécution d'une ou de plusieurs fonctions de coordination requérant un niveau d'intégrité élevé et l'exécution d'une ou de plusieurs fonctions de calcul requérant une puissance de calcul élevée.

Dans des modes de réalisation de l'invention, la première unité de calcul 100 est configurée pour exécuter des fonctions de coordination associées au traitement d'une demande de calcul. Des exemples de fonctions de coordination comprennent par exemple la vérification de l'intégrité de la demande de calcul reçue, la détermination d'un contexte d'exécution de la fonction de calcul associée à la demande de calcul et la réception du résultat de calcul issu de l'exécution de la fonction de calcul. En outre, la deuxième unité de calcul 200 peut être configurée pour exécuter les fonctions de calcul qui utilisent une puissance de calcul plus élevée que celle requise par les fonctions de coordination.

Dans d'autres modes de réalisation de l'invention, la première unité de calcul 100 peut en outre être configurée pour contrôler l'exécution de chaque fonction de calcul sur la deuxième unité de calcul 200. Par exemple, la première unité de calcul 100 peut déterminer un contexte d'exécution d'une fonction de calcul sur la deuxième unité de calcul 200. Selon les modes de réalisation de l'invention, la première unité de calcul 100 peut en outre déclencher une première et une deuxième exécution d'une même fonction de calcul sur la deuxième unité de calcul 200, la première et la deuxième exécution s'effectuant dans un même contexte d'exécution. Dans ce cas, la première unité de calcul 100 peut ensuite recevoir et comparer les résultats de calcul issus de la première et de la deuxième exécution de la même fonction de calcul.

Dans un mode de réalisation de l'invention, le dispositif de calcul de paramètres de conduite 10 peut recevoir et traiter des demandes de calcul de paramètres de conduite de type « requête/réponse » nécessitant l'exécution d'une ou de plusieurs fonctions de coordination sur la première unité de calcul 100 et l'exécution d'une fonction de calcul sur la deuxième unité de calcul 200. Dans ce cas, la première unité de calcul 100 peut déclencher une première et une deuxième exécution de la fonction de calcul, selon un même contexte d'exécution, sur la deuxième unité de calcul 200. En outre, le dispositif de calcul de paramètres de conduite 10 peut transmettre au dispositif émetteur 20 de la demande de calcul le résultat de calcul de la fonction de calcul et une notification, si aucune erreur de calcul n'est détectée, comme il sera détaillé plus loin dans la description.

Dans un autre mode de réalisation de l'invention, le dispositif de calcul de paramètres de conduite 10 peut recevoir et traiter des demandes de calcul de paramètres de conduite de type « événement asynchrone ou périodique ». Le traitement de telles demandes de calcul peut s'effectuer de manière similaire au traitement d'une demande de calcul de type « requête/réponse » sans transmettre le résultat de calcul de la fonction de calcul exécutée au dispositif émetteur 20, si une erreur de calcul est détectée, comme il sera détaillé plus loin dans la description.

Dans des modes de réalisation de l'invention, les ressources matérielles mises en oeuvre dans la deuxième unité de calcul 200 ne sont pas dupliquées. Dans ce cas, la première exécution d'une fonction de calcul, appelée aussi exécution nominale, et la deuxième exécution de la même fonction de calcul, appelée aussi exécution redondante, s'effectuent sur la deuxième unité de calcul 200 de manière séquentielle dans le temps selon un même contexte d'exécution préalablement déterminé par la première unité de calcul 100. La première unité de calcul 100 est configurée pour recevoir et comparer les résultats de calcul issus de la première et de la deuxième exécution de la fonction de calcul.

Dans d'autres modes de réalisation de l'invention, les ressources matérielles, processeurs, ressources en mémoire et autres, mises en oeuvre dans la deuxième unité de calcul 200 peuvent être dupliquées de sorte à réaliser l'exécution nominale et l'exécution redondante d'une même fonction de calcul de manière simultanée dans le temps, selon un même contexte d'exécution préalablement déterminé par la première unité de calcul 100. Dans de tels modes de réalisation, la première unité de calcul 100 reçoit et compare également les résultats de calcul issus de la première et de la deuxième exécution de la fonction de calcul.

Avantageusement, la deuxième unité de calcul 200 peut appliquer une fonction de hachage au résultat de calcul issu de chaque fonction de calcul exécutée, la sortie de la fonction de hachage constituant un paramètre de comparaison représentatif du résultat de calcul. De manière générale, tout procédé permettant d'obtenir un paramètre de comparaison à partir d'un résultat de calcul peut être mis en oeuvre par la deuxième unité de calcul 200. Dans ce cas, la première unité de calcul 100 reçoit et compare les paramètres de comparaison, au lieu de recevoir et de comparer les résultats de calcul. Ceci permet de réduire significativement le volume de données échangées entre la première 100 et la deuxième unité de calcul 200. La fonction de hachage mise en oeuvre dans la deuxième unité de calcul 200 peut, à titre d'exemple non limitatif, appartenir à la famille SHA (acronyme pour « Secure Hash Algorithm »). Dans le cas d'une demande de calcul de type « requête/réponse », la première unité de calcul 100 peut en outre recevoir le résultat de calcul associé à l'exécution nominale de la fonction de calcul lorsque les deux paramètres de comparaison sont valides et identiques. L'homme du métier comprendra que dans les cas où une fonction de hachage n'est pas utilisée, le paramètre de comparaison correspond au résultat de calcul de la fonction de calcul associée.

En variante, la première unité de calcul 100 peut être configurée pour calculer un paramètre temporel d'exécution en relation avec chaque exécution d'une fonction de calcul, l'exécution pouvant être nominale ou redondante. Un tel paramètre temporel d'exécution peut mesurer l'intervalle de temps séparant le déclenchement de l'exécution de la fonction de calcul et la réception du paramètre de comparaison par la première unité de calcul 100. La première unité de calcul 100 peut en outre être configurée pour calculer un paramètre temporel de comparaison en relation avec chaque fonction de calcul exécutée sur la deuxième unité de calcul 200. Un tel paramètre temporel de comparaison peut être l'intervalle de temps séparant le déclenchement de l'exécution nominale de la fonction de calcul et la détermination du résultat de comparaison entre les deux paramètres de comparaison.

Dans des modes de réalisation de l'invention, un seuil temporel d'exécution peut être défini et utilisé par la première unité de calcul 100 afin de valider ou invalider un paramètre de comparaison représentatif du résultat de calcul d'une fonction de calcul. Par exemple, un paramètre de comparaison peut être validé par la première unité de calcul 100 si le paramètre temporel d'exécution associé est inférieur au seuil temporel d'exécution, c'est-à-dire si le paramètre de comparaison est reçu avec un retard inférieur au seuil temporel d'exécution. Avantageusement, la validation du paramètre de comparaison associé à une exécution nominale d'une fonction de calcul peut s'effectuer avant la comparaison avec le paramètre de comparaison associé à l'exécution redondante de la même fonction de calcul. Une erreur de calcul peut être déterminée par la première unité de calcul 100 lorsqu'au moins un paramètre de comparaison est invalide, même au cas où les deux paramètres de comparaison sont identiques.

Dans d'autres modes de réalisation de l'invention, un seuil temporel de comparaison peut être défini et utilisé par la première unité de calcul 100 afin de valider ou invalider un résultat de comparaison entre deux paramètres de comparaison associés à une exécution nominale et à une exécution redondante d'une même fonction de calcul. En outre, le seuil temporel de comparaison peut être différent selon que l'exécution nominale et l'exécution redondante s'effectuent de manière séquentielle ou parallèle dans le temps. Par exemple, un résultat de comparaison peut être validé par la première unité de calcul 100 si le paramètre temporel de comparaison associé est inférieur au seuil temporel de comparaison. Une erreur de calcul peut être déterminée par la première unité de calcul 100 lorsque le résultat de comparaison est invalidé, même au cas où les deux paramètres de comparaison sont valides et identiques.

Avantageusement, la première unité de calcul 100 peut être configurée pour détecter une erreur de calcul lorsqu'au moins une des trois conditions suivantes, citées à titre d'exemple non limitatif, est détectée :
- au moins un parmi les paramètres de comparaison est invalidé ;
- le résultat de comparaison est invalidé ;
- au moins deux paramètres de comparaison ne sont pas identiques.

Avantageusement, la première unité de calcul 100 peut être configurée pour déterminer un statut de calcul (encore appelé « état de calcul ») qui peut être positif en l'absence d'erreurs de calcul. Ainsi, les modes de réalisation de l'invention fournissent un dispositif de calcul de paramètres de conduite 10 capable d'exécuter des fonctions de calcul utilisant une puissance de calcul élevée sur une deuxième unité de calcul 200 dont la sûreté de fonctionnement n'est pas assurée, tout en étant capable de détecter des erreurs aléatoires susceptibles de se produire lors de l'exécution de la fonction de calcul, par exemple.

La [fig.2] représente l'architecture d'un dispositif de calcul de paramètres de conduite 10 selon un mode de réalisation de l'invention. La première unité de calcul 100 comprend un ensemble de modules de traitement 101, 102, 103, 104, 105, 106, chaque module de traitement étant configuré pour mettre en oeuvre une fonction de coordination spécifique utilisée pour le traitement d'une demande de calcul reçue. Les modules de traitement appartenant à la première unité de calcul 100 présentent les mêmes caractéristiques en termes de puissance de calcul et de sûreté de fonctionnement que la première unité de calcul 100. De manière générale, les modules de traitement utilisent les mêmes ressources matérielles et/ou logicielles que l'unité de calcul à laquelle ils appartiennent. En particulier, la sûreté de fonctionnement de chaque module de traitement appartenant à la première unité de calcul 100 peut être assurée au moyen d'une technique de redondance matérielle.

La première unité de calcul 100 peut comprendre un premier module de traitement 101 configuré pour vérifier l'intégrité d'une demande de calcul reçue par le dispositif de calcul de paramètres de conduite 10 en provenance d'un dispositif émetteur externe 20. La vérification de l'intégrité par le premier module de traitement 101 peut s'effectuer de manière collaborative avec le dispositif émetteur externe 20 au moyen d'un algorithme de hachage donné qui peut appartenir à la famille SHA. Dans ce cas, le dispositif émetteur externe 20 peut être configuré pour calculer la somme de contrôle, encore appelée « signature » ou « emprunte », en appliquant l'algorithme de hachage à la demande de calcul. Le dispositif émetteur externe 20 peut en outre envoyer, de manière simultanée ou séquentielle dans le temps, la demande de calcul et la somme de contrôle associée. Dans ce cas, le premier module de traitement 101 peut être configuré pour appliquer le même algorithme de hachage à la demande de calcul reçue avant de comparer la somme de contrôle calculée à celle transmise par le dispositif émetteur externe 20. Si les deux sommes de contrôle sont identiques, le premier module de traitement 101 peut transmettre la demande de calcul à un autre module de traitement en vue de traitement de la demande de calcul.

Avantageusement, la première unité de calcul 100 peut comprendre un deuxième module de traitement 102 apte à recevoir une demande de calcul dont l'intégrité est préalablement vérifiée afin de déterminer un contexte d'exécution de la fonction de calcul associée au traitement de la demande de calcul reçu, l'exécution de la fonction de calcul s'effectuant sur la deuxième unité de calcul 200. La détermination d'un contexte d'exécution par le deuxième module de traitement 102 peut consister à déterminer tous les paramètres d'entrée requis dans l'exécution de la fonction de calcul. Des exemples de paramètres d'entrée peuvent comprendre, à titre illustratif, des valeurs de grandeurs fixes intervenant dans des équations mathématiques mises en oeuvre par la fonction de calcul, des nombres aléatoires, des informations de temps telles que l'instant du déclenchement de l'exécution nominale, des variables d'entrée, etc. De manière plus générale, la détermination d'un contexte de calcul consiste à définir tous les paramètres d'entrée susceptibles d'affecter le résultat de calcul, en absence d'erreurs aléatoires de calcul. En outre, le deuxième module de traitement 102 peut être configuré pour déclencher les exécutions de la fonction de calcul sur la deuxième unité de calcul 200. Par exemple, le deuxième module de traitement 102 peut déclencher simultanément l'exécution nominale et l'exécution redondante de la fonction de calcul.

Le contexte de calcul déterminé peut être reçu par un troisième module de traitement 103 appartenant à la première unité de calcul 100 et configuré pour communiquer avec la deuxième unité de calcul 200. Une telle communication peut être chiffré ou non chiffrée et peut s'effectuer au moyen d'un support de communication offrant un haut débit, par exemple de l'ordre de plusieurs Gb/s, et une faible latence, par exemple inférieure à une microseconde.

La première unité de calcul 100 peut en outre comprendre un quatrième module de traitement 104 apte à recevoir des résultats de calcul et/ou des paramètres de comparaison représentatifs des résultats de calcul en provenance de la deuxième unité de calcul 200. De tels résultats de calcul et/ou paramètres de comparaison peuvent ensuite être reçus et traités par un cinquième module de traitement 105. Le cinquième module de traitement 105 peut être configuré pour détecter des erreurs de calcul en comparant les paramètres de comparaison et en surveillant les paramètres temporels d'exécution et de comparaison associés. En l'absence d'erreurs de calcul (statut de calcul positif) en relation avec une demande de calcul de type « requête/réponse » traitée par le dispositif de calcul, le cinquième module de traitement 105 peut en outre être configuré pour formater le résultat de calcul associé avec une notification d'un statut de calcul positif. Avantageusement, un sixième module de traitement 106 peut être mis en oeuvre dans la première unité de calcul 100 et peut être configuré pour recevoir le résultat de calcul et la notification d'un statut de calcul positif, ou pour recevoir la notification de divergence de calcul, c'est-à-dire la notification d'un statut de calcul négatif, en vue de créer une réponse à la demande de calcul traitée. Optionnellement, la sixième unité de calcul peut être configurée pour calculer une somme de contrôle en utilisant un algorithme de hachage tel celui utilisé par le dispositif émetteur externe 20.

De manière similaire à la première unité de calcul 100, la deuxième unité de calcul 200 peut comprendre plusieurs modules de calcul 201, 202, 203, 204, 205 utilisés pour l'exécution d'une fonction de calcul. La sûreté de fonctionnement des modules de calcul formant la deuxième unité de calcul 200 peut ne pas être assurée. Par ailleurs, les modules de calcul mis en oeuvre dans la deuxième unité de calcul 200 peuvent ne pas être dupliqués. Dans ce cas, l'exécution nominale et l'exécution redondante d'une fonction de calcul se font de manière séquentielle dans le temps sur un même calculateur, un calculateur selon les modes de réalisation de l'invention désignant un ensemble de modules de calculs interconnectés. Alternativement, les modules de calcul formant la deuxième unité de calcul 200 peuvent être dupliqués de manière à permettre une exécution nominale et une exécution redondante d'une fonction de calcul de manière parallèle dans le temps sur deux calculateurs distincts. La description qui suit de certains modes de réalisation sera faite principalement en relation avec les modules de calcul formant un calculateur mis en oeuvre dans la deuxième unité de calcul 200.

La deuxième unité de calcul 200 peut comprendre un premier module de calcul 201 apte à communiquer avec la première unité de calcul 100 de sorte à recevoir, en relation avec une demande de calcul impliquant l'exécution d'une fonction de calcul, un contexte d'exécution, un premier ordre de déclenchement d'une exécution nominale de la fonction de calcul et un deuxième ordre de déclenchement d'une exécution redondante de la même fonction de calcul.

La deuxième unité de calcul 200 peut comprendre en outre un deuxième module de calcul 202 configurée pour exécuter, selon le contexte d'exécution déterminé, la fonction de calcul associée à la demande de calcul en cours de traitement par le dispositif de calcul de paramètres de conduite 10. L'exécution d'une fonction de calcul selon un contexte d'exécution fournit un résultat de calcul. Dans l'exemple d'une demande de calcul d'un itinéraire optimal à suivre, le résultat de calcul peut comprendre l'ensemble des tronçons de routes formant l'itinéraire optimal calculé.

En outre, la deuxième unité de calcul 200 peut comprendre, un troisième 203 et un quatrième module de calcul 204 configurés respectivement pour recevoir le résultat de calcul issu de l'exécution d'une fonction de calcul, et pour sauvegarder dans une mémoire volatile, c'est-à-dire de manière temporaire, le résultat de calcul reçu.

Avantageusement, la deuxième unité de calcul 200 peut en outre comprendre un cinquième module de calcul 205 apte à recevoir le résultat de calcul et à appliquer au résultat de calcul reçu une fonction de hachage donnée, ce qui fournit un paramètre de comparaison représentatif du résultat de calcul plus compact, donc plus rapide à renvoyer au module de traitement 104 et plus apte à être traité par le module de traitement 105.

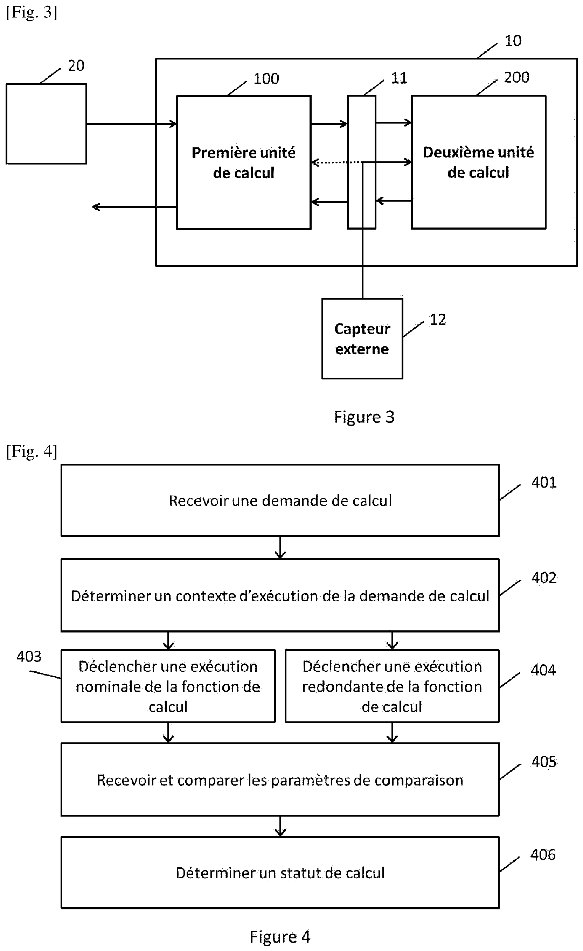

La [fig.3] représente une architecture d'un dispositif de calcul de paramètres de conduite 10, selon un autre mode de réalisation de l'invention. Dans un tel mode de réalisation, le dispositif de calcul est connecté à un capteur externe 12 fournissant un flux de données brutes nécessaire au traitement d'une ou de plusieurs demandes de calculs reçues par le dispositif de calcul de paramètres de conduite 10. Le capteur externe 12 peut par exemple être une caméra embarquée dans un véhicule. Dans ce cas, en réponse à la réception d'une demande de calcul dont l'exécution de la fonction de calcul correspondante utilise un tel flux de données brutes, la deuxième unité de calcul 200 peut être configurée pour recevoir directement le flux de données brutes fourni par le capteur externe 12, c'est-à-dire que le flux de données brutes ne traverse pas par la première unité de calcul 100. En outre, la première unité de calcul 100 peut être configurée pour recevoir une notification de transmission d'un flux de données brutes vers la deuxième unité de calcul 200 en provenance du capteur externe 12.

Dans le mode de réalisation décrit en relation avec la [fig.3], l'exécution nominale et l'exécution redondante de la fonction de calcul s'effectue de manière parallèle dans le temps. Dans ce cas, le flux de données brutes est simultanément reçu par les deux modules de calcul exécutant la même fonction de calcul. Alternativement, dans le cas où les deux exécutions nominale et redondante s'effectuent de manière séquentielle dans le temps, la deuxième unité de calcul 200 peut être configurée pour sauvegarder de manière temporaire le flux de données brutes en vue d'une utilisation lors de l'exécution redondante de la fonction de calcul.

Dans des modes de réalisation de l'invention, la première unité de calcul 100 peut en outre être configurée pour déterminer un mode d'exécution de la fonction de calcul parmi un premier mode d'exécution selon lequel les exécutions nominale et redondante s'effectuent de manière parallèle dans le temps, et un deuxième mode d'exécution selon lequel les exécutions nominales et redondante s'effectuent de manière séquentielle dans le temps. La sélection d'un mode d'exécution par la première unité de calcul 100 peut par exemple prendre en compte les besoins en termes de latence du dispositif émetteur 20 de la demande de calcul.

La [fig.4] est un organigramme représentant des étapes d'un procédé de calcul de paramètres de conduite selon un mode de réalisation de l'invention. Le procédé de calcul peut être mis en oeuvre dans un dispositif de calcul comprenant la première unité de calcul 100 et la deuxième unité de calcul 200, selon des modes de réalisation de l'invention.

A l'étape 401, la première unité de calcul 100 peut recevoir une demande de calcul d'un paramètre de conduite à partir d'un dispositif émetteur externe 20. La demande de calcul reçue implique une exécution d'une fonction de calcul correspondante sur la deuxième unité de calcul 200 dans un contexte d'exécution déterminé par la première unité de calcul 100. Dans des modes de réalisation de l'invention, le traitement d'une demande de calcul reçue peut en outre requérir un flux de données brutes fourni par un capteur externe 12. Avantageusement, l'étape 401 peut comprendre en outre une vérification de l'intégrité de la demande de calcul reçue. Ainsi, seules les demandes de calcul dont l'intégrité est vérifiée peuvent être traitées par le dispositif de calcul de paramètres de conduite 10.

A l'étape 402, la première unité de calcul 100 peut déterminer un contexte d'exécution de la fonction de calcul en déterminant, par exemple, tous les paramètres d'entrée requis pour l'exécution de la fonction de calcul. Avantageusement, l'étape 402 peut en outre comprendre une détermination du mode d'exécution de la fonction de calcul qui peut être choisi parmi un premier mode d'exécution, dans lequel les exécutions nominale et redondante s'effectuent de manière parallèle dans le temps, et un deuxième mode d'exécution, dans lequel les exécutions nominale et redondante s'effectuent de manière séquentielle dans le temps. La suite de la description de la [fig.4] sera faite principalement en relation avec le premier mode d'exécution, à titre d'exemple illustratif.

A l'étape 403, la première unité de calcul 100 peut déclencher une première exécution (exécution nominale) de la fonction de calcul sur la deuxième unité de calcul 200. L'exécution nominale de la fonction de calcul fournit une première sortie comprenant un premier résultat de calcul et un premier paramètre de comparaison représentatif du premier résultat de calcul. Avantageusement, le paramètre de comparaison peut être obtenu en appliquant une fonction de hachage au résultat de calcul correspondant. L'étape 403 peut en outre comprendre une détermination d'un premier paramètre temporel d'exécution associé au premier paramètre de comparaison.

A l'étape 404, la première unité de calcul 100 peut déclencher une deuxième exécution (exécution redondante) de la fonction de calcul sur la deuxième unité de calcul 200. L'exécution redondante de la fonction de calcul s'effectue selon le même contexte d'exécution que l'exécution nominale associée. En outre, les exécutions nominale et redondante de la fonction de calcul s'effectuent de manière parallèle dans le temps. L'exécution redondante de la fonction de calcul fournit une deuxième sortie comprenant un deuxième résultat de calcul et un deuxième paramètre de comparaison représentatif du deuxième résultat de calcul. L'étape 404 peut en outre comprendre une détermination d'un deuxième paramètre temporel d'exécution associé au deuxième paramètre de comparaison.

A l'étape 405, la première unité de calcul 100 peut recevoir et comparer le premier et le deuxième paramètre de comparaison. Les deux paramètres de comparaison peuvent être identiques ou différents. L'étape 405 peut en outre consister à associer un paramètre temporel de comparaison au résultat de la comparaison.

A l'étape 406, la première unité de calcul 100 peut déterminer un statut de calcul associé à la demande de calcul reçue en fonction du résultat de la comparaison déterminé à l'étape 405 et en fonction des paramètres temporels d'exécution et de comparaison utilisés pour valider ou invalider les paramètres de comparaison et le résultat de la comparaison tel que détaillé ci-dessus. Il est déterminé que le statut de calcul est positif si aucune erreur de calcul n'est détectée, c'est-à-dire que les deux paramètres de comparaison son identiques et valides et que le résultat de calcul est aussi valide. Au contraire, il est déterminé que le statut de calcul est négatif, lorsqu'une erreur de calcul est détectée, par exemple lorsqu'un paramètre ou un résultat de comparaison est invalide ou lorsque les deux paramètres de comparaison ne sont pas identiques.

Avantageusement, pour une demande de calcul de type « requête/réponse », le procédé de calcul peut en outre comprendre une étape supplémentaire consistant à transmettre au dispositif émetteur 20 de la demande de calcul le résultat de calcul et une notification d'un statut de calcul positif.

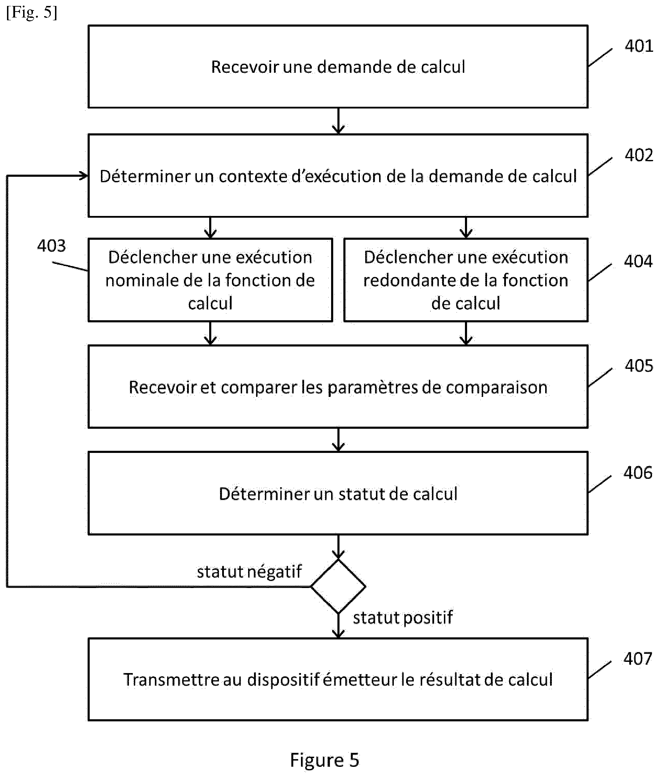

La [fig.5] représente un procédé de calcul de paramètres de conduite, selon un autre mode de réalisation de l'invention. Le procédé de la [fig.5] diffère du procédé de la [fig.4] en ce qu'il est itératif, les étapes 402 à 406 du procédé de la [fig.4] étant itérées un nombre fini de fois jusqu'à ce que le statut de calcul soit positif. L'étape 407 du procédé de la [fig.5] consiste à transmettre au dispositif émetteur 20 de la demande de calcul le résultat de calcul et une notification d'un statut de calcul positif.

Les modes de réalisation de l'invention fournissent ainsi un dispositif de calcul de paramètres de conduite 10 pouvant être embarqué dans tout objet mobile tel qu'un véhicule. Le dispositif de calcul permet le traitement de demandes de calcul requérant une puissance de calcul et un niveau d'intégrité élevés compatibles avec des applications de contrôle, telles que celle implémentées dans les voitures autonomes. Avantageusement, le traitement d'une demande de calcul selon les modes de réalisation de l'invention s'effectue en exécutant deux fois la fonction de calcul correspondante sur une deuxième unité de calcul 200 dont la sûreté de fonctionnement n'est pas assurée.

L'homme du métier comprendra que le procédé de calcul de paramètres de conduite selon les modes de réalisation peut être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier.

## Revendications

1. Dispositif de calcul de paramètres de conduite (10) destiné à être embarqué dans un véhicule, le dispositif comprenant:
- une première unité de calcul (100), associée à une puissance de calcul et à niveau d'intégrité donnés ; et
- une deuxième unité de calcul (200), comprenant un ou plusieurs calculateurs, la deuxième unité de calcul (200) étant associée à une puissance de calcul supérieure à la puissance de calcul associée à la première unité de calcul (100) et à un niveau d'intégrité inférieur au niveau d'intégrité associé à la première unité de calcul (100), la deuxième unité de calcul (200) étant configurée pour exécuter une ou plusieurs fonctions de calcul, ce qui fournit, pour chaque fonction de calcul, une sortie comprenant un résultat de calcul et un paramètre de comparaison représentatif dudit résultat de calcul ;
le dispositif étant **caractérisé en ce que**, en réponse à la réception d'une demande de calcul d'un paramètre de conduite, la demande de calcul correspondant à une fonction de calcul donnée, ladite première unité de calcul (100) est configurée pour :
- déterminer un contexte d'exécution de ladite fonction de calcul donnée sur ladite deuxième unité de calcul (200) ;
- déclencher une première exécution, dite exécution nominale, de ladite fonction de calcul donnée, selon ledit contexte d'exécution déterminé, sur ladite deuxième unité de calcul (200), ce qui fournit une première sortie comprenant un premier résultat de calcul dudit paramètre de conduite et un premier paramètre de comparaison, un premier paramètre temporel d'exécution étant associé audit premier paramètre de comparaison ;
- déclencher une deuxième exécution, dite exécution redondante, de ladite fonction de calcul donnée, selon ledit contexte d'exécution déterminé, sur ladite deuxième unité de calcul (200), ce qui fournit une deuxième sortie comprenant un deuxième résultat de calcul dudit paramètre de conduite et un deuxième paramètre de comparaison, un deuxième paramètre temporel d'exécution étant associé audit deuxième paramètre de comparaison ;
- comparer ledit premier et ledit deuxième paramètre de comparaison, un paramètre temporel de comparaison étant associé au résultat de ladite comparaison ;
- déterminer un statut de calcul dudit paramètre de conduite en fonction d'une condition dépendant du résultat de la comparaison et en fonction desdits paramètres temporels, ledit statut de calcul étant positif si les deux paramètres de comparaison sont identiques et les paramètres temporels sont valides.

2. Dispositif selon la revendication 1, **caractérisé en ce qu'**un paramètre temporel est valide s'il est inférieur à un seuil correspondant.

3. Dispositif selon la revendication 1 ou 2, **caractérisé en ce que** ledit paramètre de comparaison est obtenu à partir du résultat de calcul correspondant en appliquant une fonction de hachage.

4. Dispositif selon l'une quelconque des revendications 1 à 3, **caractérisé en ce que** ladite exécution nominale et ladite exécution redondante s'effectuent de manière séquentielle dans le temps, ladite deuxième unité de calcul (200) comprenant un ou plusieurs calculateurs.

5. Dispositif selon la revendication 4, **caractérisé en ce que** ladite exécution nominale et ladite exécution redondante s'effectuent sur un même calculateur de ladite deuxième unité de calcul (200).

6. Dispositif selon l'une quelconque des revendications 1 à 3, **caractérisé en ce que** ladite exécution nominale et ladite exécution redondante s'effectuent de manière parallèle dans le temps sur deux calculateurs distincts de ladite deuxième unité de calcul (200).

7. Dispositif selon l'une quelconque des revendications précédentes, **caractérisé en ce que** ladite demande de calcul est émise par un dispositif émetteur (20) et **en ce que** ledit dispositif de calcul est en outre configuré pour transmettre audit dispositif émetteur (20), via ladite première unité de calcul (100), ledit premier résultat de calcul et une notification d'un statut de calcul positif, si ledit statut de calcul est positif.

8. Dispositif selon l'une quelconque des revendications précédentes, **caractérisé en ce que** ladite demande de calcul est émise par un dispositif émetteur (20) et **en ce que** ledit dispositif de calcul est en outre configuré pour transmettre audit dispositif émetteur (20), via ladite première unité de calcul (100), une notification de divergence de calcul, si ledit statut de calcul est négatif.

9. Dispositif selon l'une quelconque des revendications précédentes, **caractérisé en ce que** ladite première unité de calcul (100) est configurée pour mettre en oeuvre une pluralité d'itérations jusqu'à ce que ledit statut de calcul soit positif.

10. Dispositif selon l'une quelconque des revendications précédentes, **caractérisé en ce que** ladite première unité de calcul (100) est en outre configurée pour vérifier l'intégrité de ladite demande de calcul reçue.

11. Dispositif selon l'une quelconque des revendications précédentes, **caractérisé en ce que** ledit contexte d'exécution est défini par ladite première unité de calcul (100) en fonction d'un flux de données brutes directement transmis d'un capteur externe (12) à ladite deuxième unité de calcul (200).

12. Dispositif selon l'une quelconque des revendications précédentes, **caractérisé en ce que** ledit niveau d'intégrité de ladite première unité de calcul (100) est assuré au moyen d'une technique de redondance matérielle.

13. Dispositif selon l'une quelconque des revendications précédentes, **caractérisé en ce que** ledit contexte d'exécution comprend une pluralité de variables d'entrée, une pluralité de nombres aléatoires et des informations de temps.

14. Procédé de calcul de paramètres de conduite destiné à être mis en oeuvre dans un dispositif de calcul embarqué dans un véhicule, le dispositif de calcul comprenant :
- une première unité de calcul (100), associée à une puissance de calcul et à niveau d'intégrité donnés ; et
- une deuxième unité de calcul (200), comprenant un ou plusieurs calculateurs, la deuxième unité de calcul 200 étant associée à une puissance de calcul supérieure à la puissance de calcul associée à la première unité de calcul (100) et à un niveau d'intégrité inférieur au niveau d'intégrité associé à la première unité de calcul (100), la deuxième unité de calcul (200) étant configurée pour exécuter une ou plusieurs fonctions de calcul, ce qui fournit, pour chaque fonction de calcul, une sortie comprenant un résultat de calcul et un paramètre de comparaison représentatif dudit résultat de calcul ;
le procédé comprenant, en réponse à la réception d'une demande de calcul d'un paramètre de conduite, la demande de calcul correspondant à une fonction de calcul donnée, les étapes suivantes mises en oeuvre par ladite première unité de calcul (100) et consistant à :
- déterminer (402) un contexte d'exécution de ladite fonction de calcul donnée sur ladite deuxième unité de calcul (200) ;
- déclencher (403) une première exécution, dite exécution nominale, de ladite fonction de calcul donnée, selon ledit contexte d'exécution déterminé, sur ladite deuxième unité de calcul (200), ce qui fournit une première sortie comprenant un premier résultat de calcul dudit paramètre de conduite et un premier paramètre de comparaison, un premier paramètre temporel d'exécution étant associé audit premier paramètre de comparaison ;
- déclencher (404) une deuxième exécution, dite exécution redondante, de ladite fonction de calcul donnée, selon ledit contexte d'exécution déterminé, sur ladite deuxième unité de calcul (200), ce qui fournit une deuxième sortie comprenant un deuxième résultat de calcul dudit paramètre de conduite et un deuxième paramètre de comparaison, un deuxième paramètre temporel d'exécution étant associé audit deuxième paramètre de comparaison ;
- comparer (405) ledit premier et ledit deuxième paramètre de comparaison, un paramètre temporel de comparaison étant associé au résultat de ladite comparaison ;
- déterminer (406) un statut de calcul dudit paramètre de conduite en fonction d'une condition dépendant du résultat de la comparaison et en fonction desdits paramètres temporels, ledit statut de calcul étant positif si les deux paramètres de comparaison sont identiques et les paramètres temporels sont valides.

## Patentansprüche

1. Vorrichtung zur Berechnung von Fahrparametern (10), die dazu bestimmt ist, in ein Fahrzeug integriert zu werden, wobei die Vorrichtung umfasst:
- eine erste Recheneinheit (100), die einer gegebenen Rechenleistung und einer gegebenen Integritätsstufe zugeordnet ist; und
- eine zweite Recheneinheit (200), die einen oder mehrere Rechner umfasst, wobei die zweite Recheneinheit (200) einer Rechenleistung zugeordnet ist, die höher als die der ersten Recheneinheit (100) zugeordnete Rechenleistung ist, und einer Integritätsstufe, die niedriger als die der ersten Recheneinheit (100) zugeordnete Integritätsstufe ist, wobei die zweite Recheneinheit (200) dazu ausgestaltet ist, eine oder mehrere Berechnungsfunktionen auszuführen, was, für jede Berechnungsfunktion, eine Ausgabe ergibt, die ein Berechnungsergebnis und einen für das Berechnungsergebnis repräsentativen Vergleichsparameter umfasst;
wobei die Vorrichtung **dadurch gekennzeichnet ist, dass**, als Reaktion auf das Empfangen einer Anforderung zur Berechnung eines Fahrparameters, wobei die Anforderung zur Berechnung einer gegebenen Berechnungsfunktion entspricht, die erste Recheneinheit (100) dazu ausgestaltet ist:
- einen Ausführungskontext der gegebenen Berechnungsfunktion in der zweiten Recheneinheit (200) zu bestimmen;
- eine erste Ausführung, nominale Ausführung genannt, der gegebenen Berechnungsfunktion gemäß dem bestimmten Ausführungskontext in der zweiten Recheneinheit (200) auszulösen, was eine erste Ausgabe ergibt, die ein erstes Berechnungsergebnis des Fahrparameters und einen ersten Vergleichsparameter umfasst, wobei ein erster zeitlicher Ausführungsparameter dem ersten Vergleichsparameter zugeordnet ist;
- eine zweite Ausführung, redundante Ausführung genannt, der gegebenen Berechnungsfunktion gemäß dem bestimmten Ausführungskontext in der zweiten Recheneinheit (200) auszulösen, was eine zweite Ausgabe ergibt, die ein zweites Berechnungsergebnis des Fahrparameters und einen zweiten Vergleichsparameter umfasst, wobei ein zweiter zeitlicher Ausführungsparameter dem zweiten Vergleichsparameter zugeordnet ist;
- den ersten und den zweiten Vergleichsparameter zu vergleichen, wobei dem Ergebnis des Vergleichs ein zeitlicher Vergleichsparameter zugeordnet ist;
- einen Berechnungsstatus des Fahrparameters in Abhängigkeit von einer Bedingung, die von dem Ergebnis des Vergleichs abhängt, und in Abhängigkeit von den zeitlichen Parametern zu bestimmen, wobei der Berechnungsstatus positiv ist, wenn die beiden Vergleichsparameter identisch sind und die zeitlichen Parameter gültig sind.

2. Vorrichtung nach Anspruch 1, **dadurch gekennzeichnet, dass** ein zeitlicher Parameter gültig ist, wenn er kleiner als ein entsprechender Schwellenwert ist.

3. Vorrichtung nach Anspruch 1 oder 2, **dadurch gekennzeichnet, dass** der Vergleichsparameter ausgehend von dem entsprechenden Berechnungsergebnis erhalten wird, indem eine Streuwertfunktion angewandt wird.

4. Vorrichtung nach einem der Ansprüche 1 bis 3, **dadurch gekennzeichnet, dass** die nominale Ausführung und die redundante Ausführung zeitlich sequentiell erfolgen, wobei die zweite Recheneinheit (200) einen oder mehrere Rechner umfasst.

5. Vorrichtung nach Anspruch 4, **dadurch gekennzeichnet, dass** die nominale Ausführung und die redundante Ausführung in einem selben Rechner der zweiten Recheneinheit (200) erfolgen.

6. Vorrichtung nach einem der Ansprüche 1 bis 3, **dadurch gekennzeichnet, dass** die nominale Ausführung und die redundante Ausführung zeitlich parallel in zwei verschiedenen Rechnern der zweiten Recheneinheit (200) erfolgen.

7. Vorrichtung nach einem der vorhergehenden Ansprüche, **dadurch gekennzeichnet, dass** die Anforderung zur Berechnung von einer sendenden Vorrichtung (20) gesendet wird und dass die Vorrichtung zur Berechnung ferner dazu ausgestaltet ist, an die sendende Vorrichtung (20), über die erste Recheneinheit (100), das erste Berechnungsergebnis und eine Mitteilung eines positiven Berechnungsstatus, wenn der Berechnungsstatus positiv ist, zu übertragen.

8. Vorrichtung nach einem der vorhergehenden Ansprüche, **dadurch gekennzeichnet, dass** die Anforderung zur Berechnung von einer sendenden Vorrichtung (20) gesendet wird und dass die Vorrichtung zur Berechnung ferner dazu ausgestaltet ist, an die sendende Vorrichtung (20), über die erste Recheneinheit (100), eine Berechnungsabweichungsmitteilung zu übertragen, wenn der Berechnungsstatus negativ ist.

9. Vorrichtung nach einem der vorhergehenden Ansprüche, **dadurch gekennzeichnet, dass** die erste Recheneinheit (100) dazu ausgestaltet ist, eine Vielzahl von Iterationen durchzuführen, bis der Berechnungsstatus positiv ist.

10. Vorrichtung nach einem der vorhergehenden Ansprüche, **dadurch gekennzeichnet, dass** die erste Recheneinheit (100) ferner dazu ausgestaltet ist, die Integrität der empfangenen Anforderung zur Berechnung zu überprüfen.

11. Vorrichtung nach einem der vorhergehenden Ansprüche, **dadurch gekennzeichnet, dass** der Ausführungskontext von der ersten Recheneinheit (100) in Abhängigkeit von einem Rohdatenstrom definiert wird, der direkt von einem externen Sensor (12) an die zweite Recheneinheit (200) übertragen wird.

12. Vorrichtung nach einem der vorhergehenden Ansprüche, **dadurch gekennzeichnet, dass** die Integritätsstufe der ersten Recheneinheit (100) mittels einer Hardwareredundanztechnik gewährleistet wird.

13. Vorrichtung nach einem der vorhergehenden Ansprüche, **dadurch gekennzeichnet, dass** der Ausführungskontext eine Vielzahl von Eingangsvariablen, eine Vielzahl von Zufallszahlen und Zeitinformationen umfasst.

14. Verfahren zur Berechnung von Fahrparametern, das dazu bestimmt ist, in einer in ein Fahrzeug integrierten Vorrichtung zur Berechnung durchgeführt zu werden, wobei die Vorrichtung zur Berechnung umfasst:
- eine erste Recheneinheit (100), die einer gegebenen Rechenleistung und einer gegebenen Integritätsstufe zugeordnet ist; und
- eine zweite Recheneinheit (200), die einen oder mehrere Rechner umfasst, wobei die zweite Recheneinheit 200 einer Rechenleistung zugeordnet ist, die höher als die der ersten Recheneinheit (100) zugeordnete Rechenleistung ist, und einer Integritätsstufe, die niedriger als die der ersten Recheneinheit (100) zugeordnete Integritätsstufe ist, wobei die zweite Recheneinheit (200) dazu ausgestaltet ist, eine oder mehrere Berechnungsfunktionen auszuführen, was, für jede Berechnungsfunktion, eine Ausgabe ergibt, die ein Berechnungsergebnis und einen für das Berechnungsergebnis repräsentativen Vergleichsparameter umfasst;
wobei das Verfahren, als Reaktion auf das Empfangen einer Anforderung zur Berechnung eines Fahrparameters, wobei die Anforderung zur Berechnung einer gegebenen Berechnungsfunktion entspricht, die folgenden Schritte umfasst, die von der ersten Recheneinheit (100) durchgeführt werden und darin bestehen:
- einen Ausführungskontext der gegebenen Berechnungsfunktion in der zweiten Recheneinheit (200) zu bestimmen (402);
- eine erste Ausführung, nominale Ausführung genannt, der gegebenen Berechnungsfunktion gemäß dem bestimmten Ausführungskontext in der zweiten Recheneinheit (200) auszulösen (403), was eine erste Ausgabe ergibt, die ein erstes Berechnungsergebnis des Fahrparameters und einen ersten Vergleichsparameter umfasst, wobei ein erster zeitlicher Ausführungsparameter dem ersten Vergleichsparameter zugeordnet ist;
- eine zweite Ausführung, redundante Ausführung genannt, der gegebenen Berechnungsfunktion gemäß dem bestimmten Ausführungskontext in der zweiten Recheneinheit (200) auszulösen (404), was eine zweite Ausgabe ergibt, die ein zweites Berechnungsergebnis des Fahrparameters und einen zweiten Vergleichsparameter umfasst, wobei ein zweiter zeitlicher Ausführungsparameter dem zweiten Vergleichsparameter zugeordnet ist;
- den ersten und den zweiten Vergleichsparameter zu vergleichen (405), wobei dem Ergebnis des Vergleichs ein zeitlicher Vergleichsparameter zugeordnet ist;
- einen Berechnungsstatus des Fahrparameters in Abhängigkeit von einer Bedingung, die von dem Ergebnis des Vergleichs abhängt, und in Abhängigkeit von den zeitlichen Parametern zu bestimmen (406), wobei der Berechnungsstatus positiv ist, wenn die beiden Vergleichsparameter identisch sind und die zeitlichen Parameter gültig sind.

## Claims

1. Device (10) for computing driving parameters which is intended to be installed in a vehicle, the device comprising:
- a first computing unit (100), associated with a given computing power and integrity level; and
- a second computing unit (200), comprising one or more computers, the second computing unit (200) being associated with a computing power which is higher than the computing power associated with the first computing unit (100) and with an integrity level which is lower than the integrity level associated with the first computing unit (100), the second computing unit (200) being configured to execute one or more computing functions, this providing, for each computing function, an output comprising a computing result and a comparison parameter which is representative of said computing result;
the device being **characterized in that**, in response to the reception of a request to compute a driving parameter, the computing request corresponding to a given computing function, said first computing unit (100) is configured to:
- determine a context of execution of said given computing function on said second computing unit (200);
- trigger a first execution, referred to as the nominal execution, of said given computing function, according to said determined context of execution, on said second computing unit (200), this providing a first output comprising a first result of computing said driving parameter and a first comparison parameter, a first temporal execution parameter being associated with said first comparison parameter;
- trigger a second execution, referred to as the redundant execution, of said given computing function, according to said determined context of execution, on said second computing unit (200), this providing a second output comprising a second result of computing said driving parameter and a second comparison parameter, a second temporal execution parameter being associated with said second comparison parameter;
- compare said first and said second comparison parameter, a temporal comparison parameter being associated with the result of said comparison;
- determine a computing status of said driving parameter in accordance with a condition depending on the result of the comparison and in accordance with said temporal parameters, said computing status being positive if the two comparison parameters are identical and the temporal parameters are valid.

2. Device according to Claim 1, **characterized in that** a temporal parameter is valid if it is lower than a corresponding threshold.

3. Device according to Claim 1 or 2, **characterized in that** said comparison parameter is obtained from the corresponding computing result by applying a hash function.

4. Device according to any one of Claims 1 to 3, **characterized in that** said nominal execution and said redundant execution are carried out sequentially in time, said second computing unit (200) comprising one or more computers.

5. Device according to Claim 4, **characterized in that** said nominal execution and said redundant execution are carried out on the same computer of said second computing unit (200).

6. Device according to any one of Claims 1 to 3, **characterized in that** said nominal execution and said redundant execution are carried out in parallel in time on two distinct computers of said second computing unit (200) .

7. Device according to any one of the preceding claims, **characterized in that** said computing request is transmitted by a transmitter device (20) and **in that** said computing device is furthermore configured to transmit to said transmitter device (20), via said first computing unit (100), said first computing result and a notification of a positive computing status, if said computing status is positive.

8. Device according to any one of the preceding claims, **characterized in that** said computing request is transmitted by a transmitter device (20) and **in that** said computing device is furthermore configured to transmit to said transmitter device (20), via said first computing unit (100), a computing divergence notification, if said computing status is negative.

9. Device according to any one of the preceding claims, **characterized in that** said first computing unit (100) is configured to implement a plurality of iterations until said computing status is positive.

10. Device according to any one of the preceding claims, **characterized in that** said first computing unit (100) is furthermore configured to verify the integrity of said received computing request.

11. Device according to any one of the preceding claims, **characterized in that** said context of execution is defined by said first computing unit (100) in accordance with a stream of raw data which is transmitted directly from an external sensor (12) to said second computing unit (200).

12. Device according to any one of the preceding claims, **characterized in that** said integrity level of said first computing unit (100) is ensured by means of a hardware redundancy technique.

13. Device according to any one of the preceding claims, **characterized in that** said context of execution comprises a plurality of input variables, a plurality of random numbers and time information.

14. Method for computing driving parameters which is intended to be implemented in a computing device installed in a vehicle, the computing device comprising:
- a first computing unit (100), associated with a given computing power and integrity level; and
- a second computing unit (200), comprising one or more computers, the second computing unit 200 being associated with a computing power which is higher than the computing power associated with the first computing unit (100) and with an integrity level which is lower than the integrity level associated with the first computing unit (100), the second computing unit (200) being configured to execute one or more computing functions, this providing, for each computing function, an output comprising a computing result and a comparison parameter which is representative of said computing result;
the method comprising, in response to the reception of a request to compute a driving parameter, the computing request corresponding to a given computing function, the following steps implemented by said first computing unit (100) and consisting in:
- determining (402) a context of execution of said given computing function on said second computing unit (200) ;
- triggering (403) a first execution, referred to as the nominal execution, of said given computing function, according to said determined context of execution, on said second computing unit (200), this providing a first output comprising a first result of computing said driving parameter and a first comparison parameter, a first temporal execution parameter being associated with said first comparison parameter;
- triggering (404) a second execution, referred to as the redundant execution, of said given computing function, according to said determined context of execution, on said second computing unit (200), this providing a second output comprising a second result of computing said driving parameter and a second comparison parameter, a second temporal execution parameter being associated with said second comparison parameter;
- comparing (405) said first and said second comparison parameter, a temporal comparison parameter being associated with the result of said comparison;
- determining (406) a computing status of said driving parameter in accordance with a condition depending on the result of the comparison and in accordance with said temporal parameters, said computing status being positive if the two comparison parameters are identical and the temporal parameters are valid.
